# EUROPEAN PATENT SPECIFICATION

(11) **EP 2 527 200 B1**
(45) Date of publication and mention of the grant of the patent: **27.01.2016**
(21) Application number: 11174581.6
(22) Date of filing: 19.07.2011
(51) Int. Cl.: B60Q 3/02, B60Q 3/06, B62J 6/00

(54) **Lighting device of storage compartment for scooter type vehicles**
Beleuchtungsvorrichtung für das Aufbewahrungsfach von rollerartigen Fahrzeugen
Dispositif d'éclairage de compartiment de stockage pour véhicules de type scooter

(30) Priority: 24.05.2011 TW 100118154
(43) Date of publication of application: 28.11.2012
(73) Proprietor: Kwang Yang Motor Co., Ltd., Kaohsiung City 807 (TW)
(72) Inventor: Lin, Chien-Chen, Kaohsiung City (TW); Lin, Tsang-Mao, 807 Kaohsiung City (TW)
(74) Representative: Lang, Christian

(56) References cited:
- DE-A1-102006 012 606
- DE-C1- 19 654 802
- JP-A- 1 202 587
- JP-A- 1 202 588
- JP-A- 2 220 937
- JP-A- 3 193 538

## Description

### Cross-Reference to Related Application

This application claims the priority of Taiwan Patent Application No. 100118154, filed on May 24, 2011.

### BACKGROUND OF THE INVENTION

### Field of Invention

The present invention relates to a scooter type vehicle with a storage compartment and a lighting device, and more particularly to a lighting device using a non-contact sensor to detect a change of a distance between the non-contact sensor and a bottom plate of a rider seat to control action timing of a lighting unit in a lighting storage compartment.

### Related Art

A storage device for scooter type vehicles includes a front storage box without a cover and a storage compartment covered by the rider seat. Since the storage compartment is disposed below the rider seat and is covered and locked by the rider seat, the storage compartment is secure and concealed. However, if there is no sufficient light provided, it is not easy to find the desired articles from the storage compartment at a dark area. In an early period, to solve the problem, a lighting source is disposed in the storage compartment, and a press switch for power supply of the lighting source is set therein; therefore, when the rider seat is closed (or the rider seat lock is engaged) to press the press switch, the lighting source is turned off and when rider seat is opened (or when the rider seat lock is unengaged) to release the press switch, the lighting source is turned on In addition, the rider seat of the scooter type vehicle is usually in a state of close (or the rider seat lock is engaged), such that most of time the contact type of press switch stays in a pressed condition, which may cause the press switch failure. Moreover, under the effect of an impact force of the rider seat being closed or a long-time pressure due to the weight of rider, a lifespan of the press switch is undesirable.

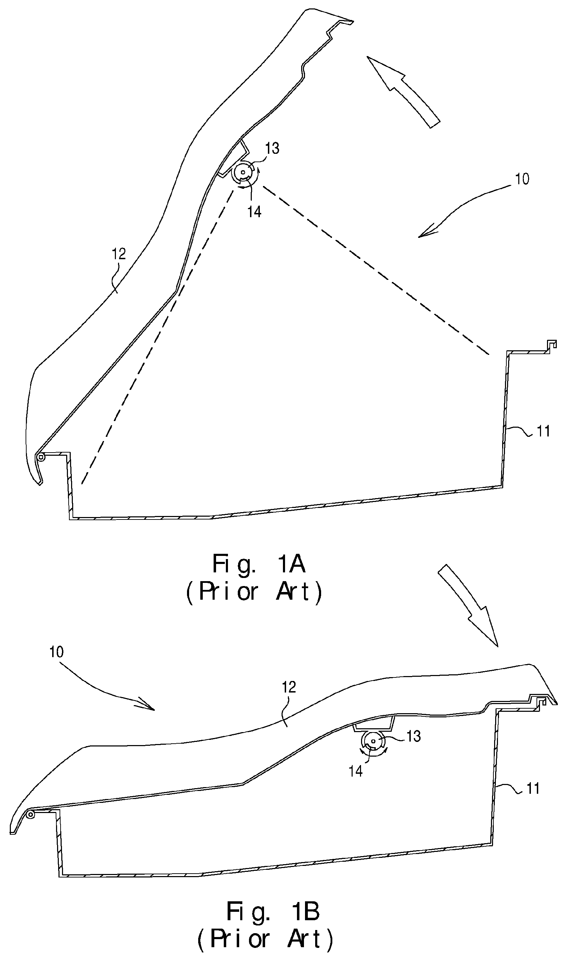

In addition, a lighting structure of the scooter storage compartment is proposed in Taiwan Utility Model No. M380917, which is as shown in FIG. 1A and FIG. 1B. In the lighting structure 10 of the storage compartment for scooters, a light source piece 13 disposed on a bottom surface of the rider seat 12 is used to provide light when the rider seat 12 is open to expose an opening of the storage compartment 11, and a lighting function of the light source piece 13 is as follows. An angle switch 14 on the light source piece 13 is used, so when the rider seat 12 is pivotly opened or closed to a predetermined angle, the angle switch 14 may turn on or turn off the light source piece 13. However, although the angle switch 14 may be used to automatically turn on or turn off the light source piece 13, when the scooter falls down or is located at an inclined ground, such as a slope, a viaduct or a mountain road, the angle switch 14 may automatically activate the lighting function of the light source piece 13, such that the electric power is wasted, and even the electric power of a battery is exhausted when the scooter is in a static state.

JP 1 202587 A discloses an illuminating device for a motorcycle storage room. A front end of a bottom plate of a seat is pivotally supported by a hinge in front of an opening of a storage camber. The opening of the storage chamber is covered with the seat. A circular shaped bracket is mounted to a bottom surface of the seat, fixing a magnet. A lead switch is arranged in a position corresponding to the magnet. When the seat is moved to an opening position, an on-off control of an illuminating lamp is performed.

DE 196 54 802 C1 teaches an arrangement for illuminating a storage compartment equipped with a closure flap e.g. for a motor vehicle glove box. The arrangement has components of an electrical switching device connected to a light for illuminating the glove box. The switching device switches off the light when a glove box cover is closed and switches it on when the glove box cover is open. The switching device consists of a transmitter and receiver. The transmitter may be an infrared light emitting diode, and the receiver may be an infrared receiver. A blocking device arranged between the transmitted and receiver interrupts the transmission path between said transmitter and receiver when the glove box cover is closed. The transmission path is progressively uncovered as the glove box cover is opened and is fully uncovered when the glove box cover is fully open. A circuit coupled to the transmitter and receiver controls the current according to the intensity of radiation received by the receiver.

### SUMMARY OF THE INVENTION

In view of this, the present invention is directed to a scooter type vehicle with a storage compartment and a lighting device, which uses a non-contact distance sensing switch to control an action of a lighting unit according to a distance between a rider seat and a storage compartment.

In a scooter type vehicle with a storage compartment and a lighting device provided in the present invention, a storage compartment thereof comprises a top opening and a pivot joint portion, the pivot joint portion is connected to a rider seat, and the rider seat may be pivoted to a closing position where a bottom plate of the rider seat covers the top opening and an opening position where the bottom plate of the rider seat is away from the top opening with the pivot joint portion as an axis. A distance sensing switch unit and at least one lighting unit are respectively disposed in the storage compartment, in which the distance sensing switch unit is powered by a power unit and comprises a distance sensor and a power supply switch, and the lighting unit is electrically coupled to the power supply switch. The distance sensor detects a change of a distance between the distance sensor and the bottom plate of the rider seat, so that the power supply switch is turned on to enable the lighting unit to provide illumination, or the power supply switch is turned off to stop the illumination by the lighting unit.

The storage compartment comprises a platform higher than an inner side bottom surface of the storage compartment, and the distance sensing switch unit is disposed on the platform, so as to prevent sundries from entering a position between the distance sensing switch unit and the bottom plate of the rider seat to interfere the operation of the distance sensor.

The characteristics of the present invention are as follows. The lighting device of the storage compartment of the present invention uses a non-contact distance sensing switch unit to turn on or turn off a circuit of the lighting unit, which is not in direct contact with the rider seat or a lock hook, thereby reducing the damage of the distance sensing switch unit when the rider seat is opened and closed. In the present invention, the distance between the distance sensing switch unit of the storage compartment and the rider seat is used to judge whether to activate the lighting device, which is not affected by a landform where the scooter type vehicle is located. According to the present invention, a delay switch for prolonging the power supplying time is added in the distance sensing switch unit. When the power supply switch is switched on, the delay switch is turned on, and then the power supply switch may automatically return to a switch-off state after a set prolonged time when the rider seat is not at the closing position, so the electric power is not wasted.

### BRIEF DESCRIPTION OF THE DRAWINGS

The present invention will become more fully understood from the detailed description given herein below for illustration only, and thus are not limitative of the present invention, and wherein:
FIG. 1A is a schematic view of turning on lighting of a storage compartment in a lighting device of the storage compartment for scooter type vehicles in the prior art;
FIG. 1B is a schematic view of turning off lighting of a storage compartment in FIG. 1A;
FIG. 2 is a schematic three-dimensional view of a scooter type vehicle storage compartment, a lighting device of the storage compartment and a rider seat according to an embodiment of the present invention;
FIG. 3 is a sectional view of a lighting device of a storage compartment for scooter type vehicles and a rider seat at a closing position according to an embodiment of the present invention;
FIG. 4 is a sectional view of the lighting device of the storage compartment for scooter type vehicles and the rider seat at an opening position according to an embodiment of the present invention;
FIG. 5 is a partial enlarged view of the number 5 in FIG. 3;
FIG. 6 is a partial enlarged view of the number 6 in FIG. 4;
FIG. 7 is an action schematic view of a distance sensing switch unit and a lighting unit according to an embodiment of the present invention;
FIG. 8 is an action schematic view of a distance sensing switch unit, a delay switch and a lighting unit according to an embodiment of the present invention;
FIG. 9 is a schematic three-dimensional exploded view of a distance sensing switch unit disposed on a storage compartment through an engaging structure according to an embodiment of the present invention;
FIG. 10 is a schematic three-dimensional combined view of FIG. 9; and
FIG. 11 is a schematic three-dimensional view of a lighting unit disposed on a storage compartment through an engaging structure according to an embodiment of the present invention.

### DETAILED DESCRIPTION OF THE INVENTION

The embodiments of the present invention are illustrated as follows with reference to the drawings, and the accompanying drawings are simplified schematic views merely for exemplary illustration of a basic structure of the present invention. Therefore, components related to the preset invention are merely indicated in the drawings, and are not drawn according to the numbers, shapes or sizes of the components in implementation. Specification and size of the components during actual implementation are actually an optional design, and a layout state of the components may be more complicated.

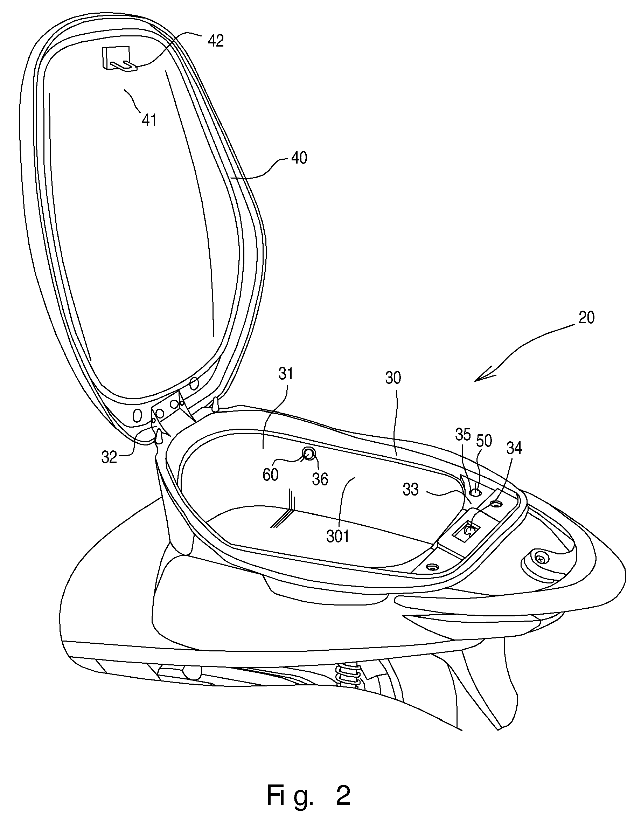

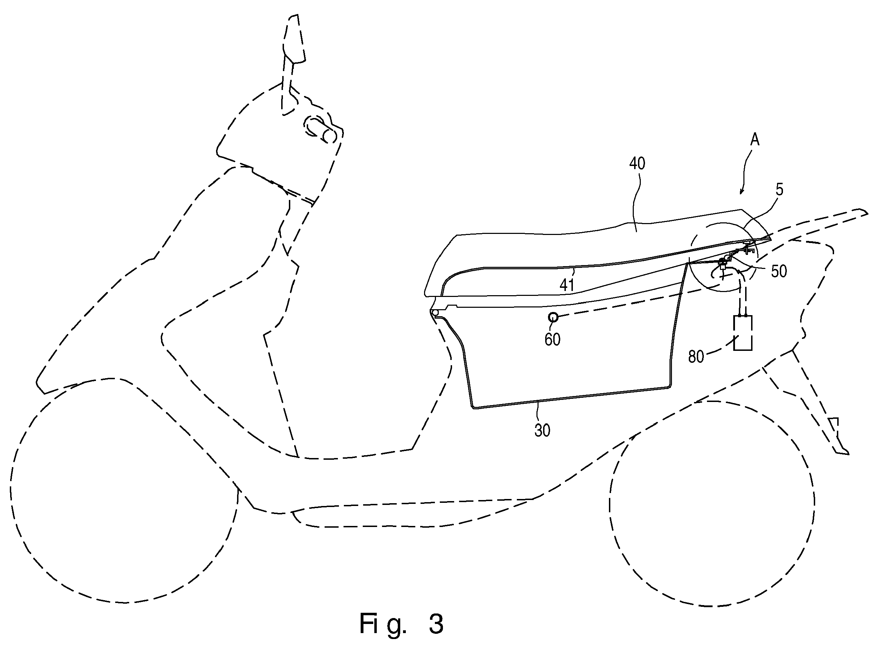

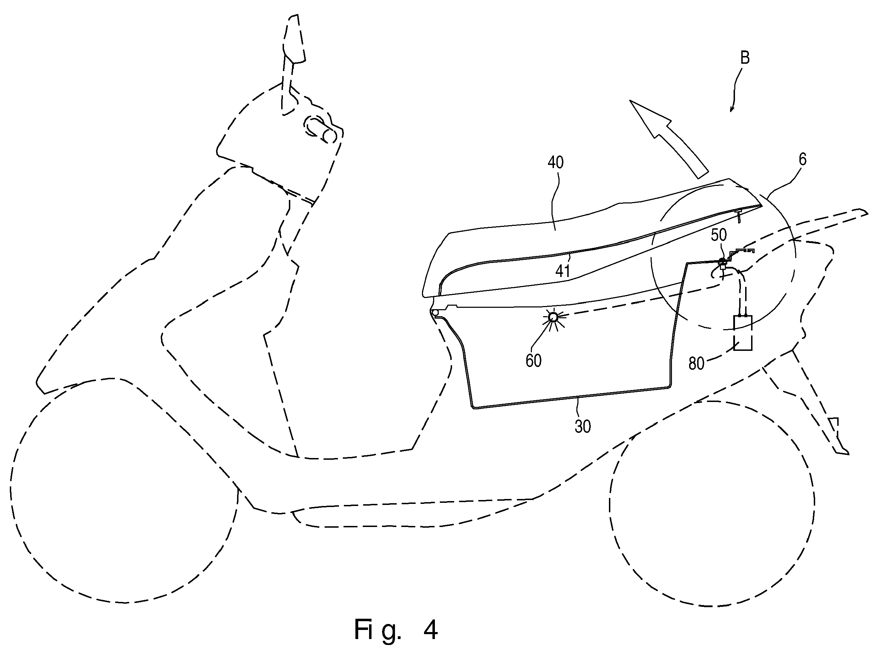

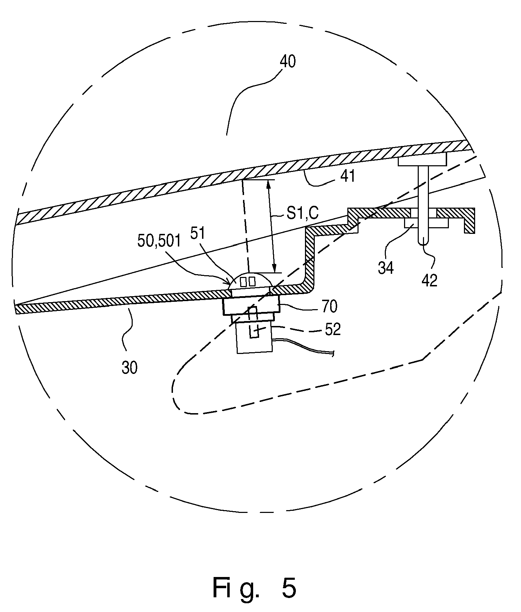

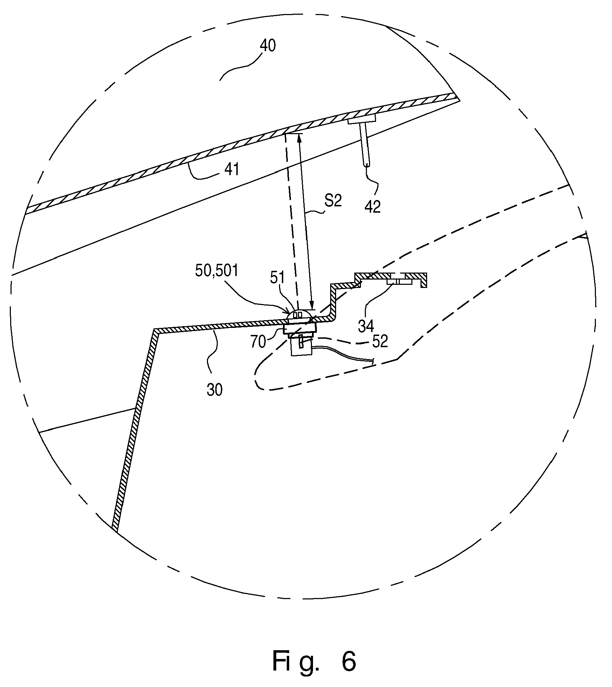

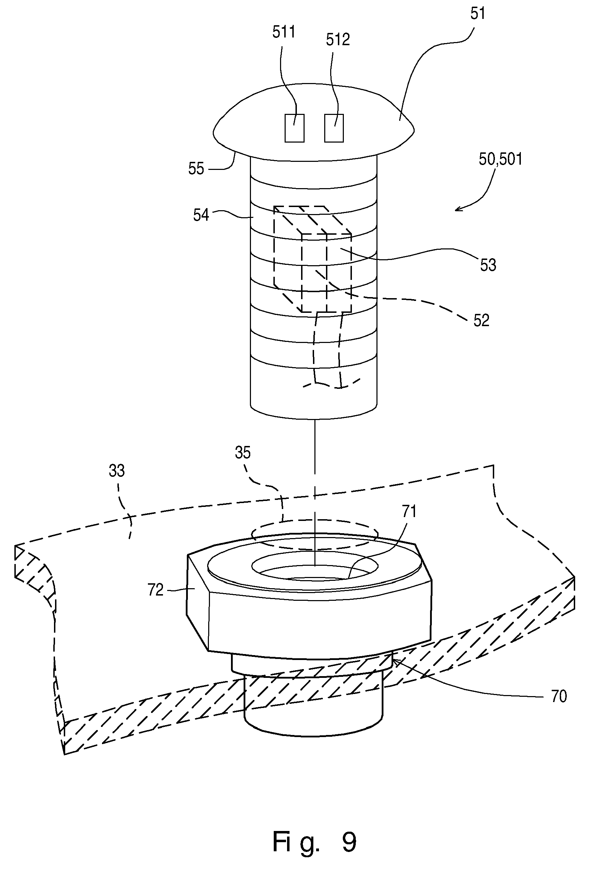

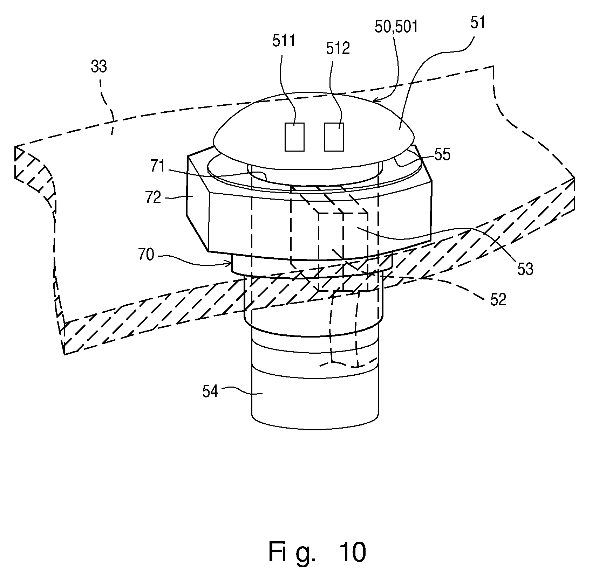

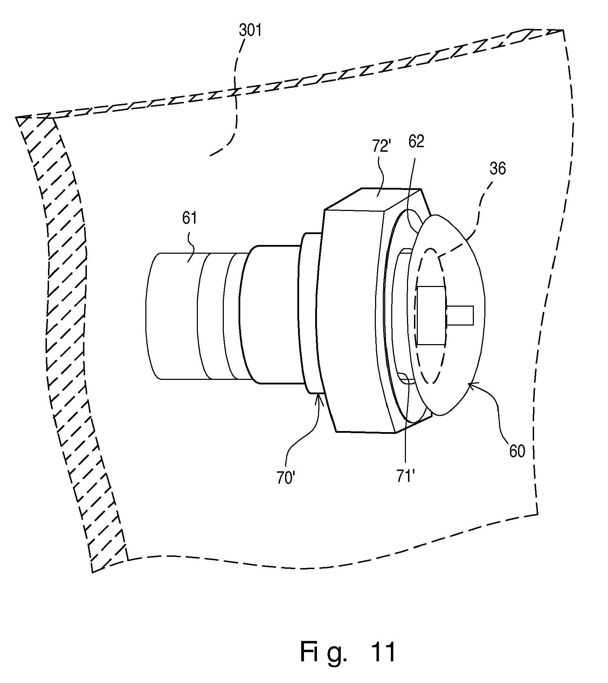

FIG. 2 is a schematic three-dimensional view of a storage compartment for scooter type vehicles, a lighting device of the storage compartment and a rider seat according to an embodiment of the present invention. FIG. 3 is a sectional view of a lighting device of a storage compartment for scooter type vehicles and a rider seat at a closing position according to an embodiment of the present invention. FIG. 4 is a sectional view of the lighting device of the storage compartment for scooter type vehicles and the rider seat at an opening position according to an embodiment of the present invention. FIG. 5 is a partial enlarged view of the number 5 in FIG. 4. FIG. 6 is a partial enlarged view of number 6 in FIG. 4. Referring to FIG. 2 to FIG. 6, in the lighting device 20 of the storage compartment for scooter type vehicles in this embodiment, the storage compartment 30 includes a top opening 31 and is used for placing articles of a user, a pivot joint portion 32 is disposed at a front end of the storage compartment 30 and is connected to a rider seat 40, the rider seat 40 includes a bottom plate 41 facing the top opening 31 and may be pivoted to a closing position A (when the rider seat is at this position, the bottom plate 41 covers the top opening 31) and an opening position B (when the rider seat is at this position, the bottom plate 41 pivotly moves away the top opening 31) with the pivot joint portion 32 as an axis. According to the foregoing components, a distance sensing switch unit 50 and a lighting unit 60 are respectively disposed at an inner side of the storage compartment 30. The distance sensing switch unit 50 may be, but is not limited to, an infrared sensing switch unit 501, and a power unit 80 supplies the required electric power (the power unit 80 may be a rechargeable battery or a storage battery). FIG. 9 is a schematic three-dimensional exploded view of a distance sensing switch unit disposed on a storage compartment through an engaging structure according to an embodiment of the present invention. FIG. 10 is a schematic three-dimensional combined view of FIG. 9. FIG. 11 is a schematic three-dimensional view of a lighting unit disposed in a storage compartment through an engaging structure according to an embodiment of the present invention. Referring to FIG. 9 to FIG. 11, in an embodiment, the distance sensing switch unit 50 includes a distance sensor 51 and a power supply switch 52 for controlling switch-on or switch-off of the distance sensing switch unit 50 through the distance sensor 51, the lighting unit 60 is electrically coupled to the power supply switch 52, and the distance sensor 51 may detect a change of a distance between the distance sensor 51 and the bottom plate 41 of the rider seat 40, so that the power supply switch 52 is switched on to enable the lighting unit 60 to provide lighting in the storage compartment 30, or the power supply switch 52 is switched off to stop the lighting of the lighting unit 60.

In the foregoing embodiment, the lighting unit 60 is disposed on an inner side wall surface of the storage compartment 30, and in practice, the installation height may be close to the top opening 31 as much as possible, so as to prevent the articles put in the storage compartment 30 from shielding the illumination light. In addition, a light source of the lighting unit 60 may be a Light Emitting Diode (LED) lamp, a cold cathode lamp or an incandescent lamp.

In the foregoing embodiment, the storage compartment 30 includes a platform 33 higher than an inner side bottom surface of the storage compartment 30, the distance sensing switch unit 50 (or the infrared sensing switch unit 501) may be disposed on the platform 33, so as to avoid an unexpected detection result due to the shielding of the articles in the storage compartment 30.

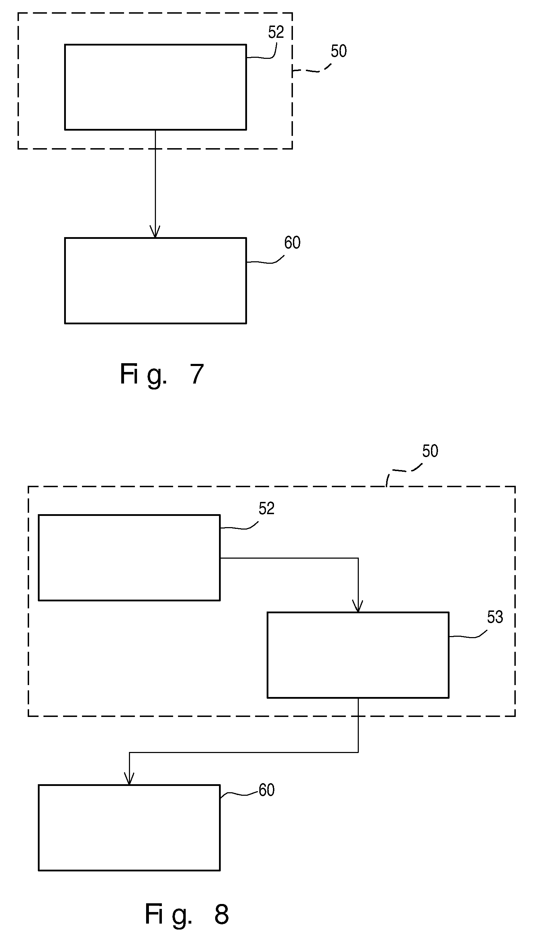

FIG. 7 is an action schematic view of a distance sensing switch unit and a lighting unit according to an embodiment of the present invention. Referring to FIG. 3 to FIG. 7, in the foregoing embodiment, when the distance sensing switch unit 50 is the infrared sensing switch unit 501, the distance sensor 51 includes an infrared emitting unit 511 and an infrared receiving unit 512, and the distance detected by the infrared sensing switch unit 501 between the infrared sensing switch unit 501 and the bottom plate 41 is a distance converted through a time difference which is calculated from emitting infrared rays by the infrared emitting unit 511 towards the bottom plate 41 until the infrared rays are refracted and then received by the infrared receiving unit 512. The infrared sensing switch unit 501 presets a switch-off distance C, and the switch-off distance C may be set to the distance S1 between the infrared receiving unit 512 and the bottom plate 41 of the rider seat 40 at the closing position A or a distance slightly larger than the distance S1. The logic of controlling the power supply switch 52 by the infrared sensing switch unit 501 is as follows : When the distance detected by the infrared sensing switch unit 501 is smaller than or equal to the switch-off distance C, the power supply switch 52 is switched off; and when the distance detected by the infrared sensing switch unit 501 is larger than the switch-off distance C, the power supply switch 52 is switched on. Therefore, when the rider seat 40 is at the closing position A, the distance S1 between the infrared receiving unit 512 and the bottom plate 41 of the rider seat 40 is equal to the switch-off distance C or smaller than the switch-off distance C, the power supply switch 52 is in a switch-off state at this time, and the lighting unit 60 does not provide the light. When the rider seat 40 is at an opening position B, the distance S2 between the infrared receiving unit 512 and the bottom plate 41 of the rider seat 40 is larger than the switch-off distance C, and the power supply switch 52 is in a switch-on state at this time.

Further, FIG. 8 is an action schematic view of a distance sensing switch unit, a delay switch and a lighting unit according to an embodiment of the present invention. Referring to FIG. 8, a delay switch 53 electrically coupled to the power supply switch 52 and the lighting unit 60 and prolonging a switch-on state (that is, prolonging the power supplying time) is further located between the power supply switch 52 and the lighting unit 60. When the power supply switch 52 is switched on, the delay switch 53 is activated at once for measuring time. When the prolonged time set by the delay switch 53 is over (that is, the measured time reaches the preset time), the power supply switch 52 returns to the switch-off state, and thus, when the user closes the rider seat 40, but the rider seat 40 is not engaged with the storage compartment 30, the lighting unit 60 is automatically switched off under the action of the delay switch 53 in the case that the user is unaware of the condition.

In an embodiment of the present invention, a rider seat lock 34 is further disposed on the storage compartment 30, and a lock hook 42 is disposed on the bottom plate 41 of the rider seat 40. When the rider seat 40 is at the closing position A, the rider seat lock 34 and the lock hook 42 form an engaged state, and when the rider seat 40 is at the opening position B, the rider seat lock 34 and the lock hook 42 form an unengaged state.

FIG. 9 is a schematic three-dimensional exploded view of a distance sensing switch unit disposed on a storage compartment through an engaging structure according to an embodiment of the present invention. FIG. 10 is a schematic three-dimensional combined view of FIG. 9. FIG. 11 is a schematic three-dimensional view of a lighting unit disposed in a storage compartment through an engaging structure according to an embodiment of the present invention. Referring to FIG. 9 to FIG. 11, in an embodiment of the present invention, the distance sensing switch unit 50 includes a main body 54 and a spreading lip edge 55, the storage 30 has a jack 35 for inserting the distance sensing switch unit 50, and an engaging structure 70 corresponding to the position of the jack 35 is disposed on an outer side surface of the storage compartment 30 and has an internal hoe 71 and a pad 72. The main body 54 of the distance sensing switch unit 50 is inserted into the jack 35 through the platform 33 at the inner side of the storage compartment 30, and penetrates the internal hole 71 of the engaging structure 70 disposed on an outer side surface of the platform 33 of the storage compartment 30. When the main body 54 is engaged with the internal hole 71, the lip edge 55 and the pad 72 clamp the storage compartment 30 up and down and clamp a thick wall of the storage compartment 30 close to the jack 35 to form a close and fixed state. Definitely, the engaging structure 70 may use a common clipping rod for engaging, or a screw and nut group for a screwing fixed state, and FIG. 9 and FIG. 10 show a screwing fixed state using the screw and nut group. The similar combinational structure is as follows. In an embodiment of the present invention, the lighting unit 60 includes a main body 61 and a spreading lip edge 62, a socket 36 is disposed on an inner side wall surface 301 of the storage compartment 30 for inserting the lighting unit 60, and an engaging structure 70' is disposed on an outer side surface of the storage compartment 30 corresponding to the position of the socket 36 and includes an internal hole 71' and a pad 72'. The main body 61 of the lighting unit 60 is inserted into the socket 36 from the inner side of the storage compartment 30, and penetrates the internal hole 71' of the engaging structure 70' disposed on a side surface of the storage compartment 30. When the main body 61 is engaging with the internal hole 71', the lip edge 62 and the pad 72' clamp a thick wall of the storage compartment 30 close to the socket 36 up and down to form a tight and fixed state. Definitely, the engaging structure 70' may use a common clipping rod for engaging, or a screw and nut group for a screwing fixed state.

It can be seen from the above that, the lighting device of the storage compartment of the present invention uses a non-contact distance sensing switch unit to control the switch-on or the switch-off of the circuit of the lighting unit, and is not in direct contact with the rider seat or the lock hook, thereby reducing damages of the distance sensing switch unit when the rider seat is opened and closed. In the present invention, the distance between the distance sensing switch unit of the storage compartment and the rider seat is used for judging whether to activate the lighting, and the lighting is not affected by a landform where the scooter is located. According to the present invention, a delay switch for prolonging the power supplying time is added in the distance sensing switch unit, and when the power supply switch is switched on, the delay switch is turned on, and then the power supply switch may return to a switch-off state automatically when a set prolonged time is over as the rider seat is not at the closing position, so the electric power is not wasted.

## Claims

1. A scooter type vehicle with a storage compartment (30) and a lighting device (20), wherein the storage compartment (30) has a top opening (31), a pivot joint portion (32) and a platform (33), the platform (33) being higher than an inner side bottom surface of the storage compartment (30), the pivot joint portion (32) is connected to a rider seat (40) having a bottom plate (41), the rider seat (40) is pivoted to a closing position (A) for enabling the bottom plate (41) to cover the top opening (31) and to an opening position (B) for enabling the bottom plate (41) to move away from the top opening (31) with the pivot joint portion (32) as an axis, wherein:
a distance sensing switch unit (50) and at least one lighting unit (60) are respectively disposed in the storage compartment (30), wherein the distance sensing switch unit (50) is an infrared sensing switch unit (501), the distance sensing switch unit (50) is disposed on the platform (33), the distance sensing switch unit (50) is powered by a power unit (80), and comprises a distance sensor (51) having an infrared emitting unit (511) and an infrared receiving unit (512) and a power supply switch (52) for controlling switch-on or switch-off through the distance sensor (51), wherein, when the rider seat (40) is at the closing position (A), the power supply switch (52) is in a switch-off state, and when the rider seat (40) is at the opening position (B), the power supply switch (52) is in a switch-on state, wherein the lighting unit (60) is electrically coupled to the power supply switch (52), the distance sensor (51) detects a change of a distance between the distance sensor (51) and the bottom plate (41) of the rider seat (40), so that the power supply switch (52) is switched on to enable the lighting unit (60) to light, or the power supply switch (52) is switched off to stop the lighting unit (60) from lighting,
a delay switch (53) for prolonging a power supplying time is further electrically connected between the power supply switch (52) and the lighting unit (60), wherein, when the power supply switch (52) is switched on, the delay switch (53) is activated for action, and when a prolonged time set by the delay switch (53) is over, the power supply switch (52) is returned to the switch-off state to stop power supply for the lighting unit (60).

2. The scooter type vehicle with the storage compartment (30) and the lighting device (20) according to claim 1, wherein the lighting unit (60) is disposed on an inner side wall surface (301) of the storage compartment (30).

3. The scooter type vehicle with the storage compartment (30) and the lighting device (20) according to claim 1, wherein a light source of the lighting unit (60) is a Light Emitting Diode (LED) lamp, a cold cathode lamp or an incandescent lamp.

4. The scooter type vehicle with the storage compartment (30) and the lighting device (20) according to claim 1, wherein a rider seat lock (34) is further disposed on the storage compartment (30), a lock hook (42) is disposed on the bottom plate (41) of the rider seat (40), when the rider seat (40) is at the closing position (A), the rider seat lock (34) and the lock hook (42) form an engaged state, and when the rider seat (40) is at the opening position (B), the rider seat lock (34) and the lock hook (42) form an unengaged state.

5. The scooter type vehicle with the storage compartment (30) and the lighting device (20) according to claim 1, wherein the distance sensing switch unit (50) has a main body (54) and a lip edge (55), the storage compartment (30) has a jack (35), the distance sensing switch unit (50) is inserted into the jack (35) from an inner side of the storage compartment (30), so as to be combined with an engaging structure (70) disposed at an outer side of the storage compartment (30) corresponding to a position of the jack (35), the engaging structure (70) has an internal hole and a pad (72), the internal hole is used for receiving the distance sensing switch unit (50), and the lip edge (55) and the pad (72) clamp a thick wall of the storage compartment (30) close to the jack (35) up and down to form an engaged state, and the engaging structure (70) is a clipping rod or a screw and nut group.

6. The scooter type vehicle with the storage compartment (30) and the lighting device (20) according to claim 1, wherein the lighting unit (60) has a lip edge (62), at least one socket (36) is disposed on an inner side wall surface (301) of the storage compartment (30), the lighting unit (60) is inserted into the socket (36) from an inner side of the storage compartment (30), so as to be combined with an engaging structure (70') disposed at an outer side of the storage compartment (30) corresponding to a position of the socket (36), the engaging structure (70') has an internal hole and a pad (72'), and the internal hole and the pad (72') clamp a thick wall of the storage compartment (30) close to the socket (36) up and down to form an engaged state, and the engaging structure (70') is a clipping rod or a screw and nut group.

## Patentansprüche

1. Rollerähnliches Fahrzeug mit einem Staufach (30) und einer Beleuchtungsvorrichtung (20), wobei das Staufach (30) eine obere Öffnung (31), ein Drehgelenkverbindungsteil (32) und eine Plattform (33) aufweist, wobei die Plattform (33) höher als eine innere seitliche Bodenfläche des Staufaches (30) ausgebildet ist, wobei das Drehgelenkverbindungsteil (32) mit einem Fahrersitz (40) verbunden ist, der eine Bodenplatte (41) aufweist, wobei der Fahrersitz (40) zwischen einer Schließposition (A), um der Bodenplatte (41) zu ermöglichten, die obere Öffnung (31) abzudecken, und einer Öffnungsposition (B), um der Bodenplatte (41) zu ermöglichen, von der oberen Öffnung (31) wegbewegt zu werden, mit dem Drehgelenkverbindungsteil (32) als einer Achse verschwenkbar ist, wobei:
eine Entfernungsmessschaltereinheit (50) und mindestens eine Beleuchtungseinheit (60) jeweils in dem Staufach (30) ausgebildet sind, wobei die Abstandsmessschaltereinheit (50) eine Infrarotmessschaltereinheit (501) ist, wobei die Abstandsmessschaltereinheit (50) auf der Plattform (33) ausgebildet ist, wobei die Abstandsmessschaltereinheit (50) durch eine Leistungseinheit (80) betrieben wird und einen Abstandssensor (51) mit einer Infrarotemittiereinheit (511) und einer Infrarotempfangseinheit (512) und einen Netzteilschalter (52) zum Steuern des Anschaltens oder Ausschaltens durch den Distanzsensor (51) aufweist, wobei, wenn der Fahrersitz (40) sich in der Schließposition (A) befindet, sich der Netzteilschalter (52) in einem Ausschaltzustand befindet, und wobei, wenn der Fahrersitz (40) sich in der Öffnungsposition (B) befindet, sich der Netzteilschalter (52) in einem Anschaltzustand befindet, wobei die Beleuchtungseinheit (60) elektrisch mit dem Netzteilschalter (52) verbunde ist, wobei der Abstandsensor (51) eine Änderung eines Abstands zwischen dem Abstandsensor (51) und der Bodenplatte (41) des Fahrersitzes (40) detektiert, sodass der Netzteilschalter (52) angeschaltet wird, um der Beleuchtungseinheit (60) zu ermöglichen, zu leuchten, oder der Netzteilschalter (52) abgeschaltet wird, um das Leuchten der Beleuchtungseinheit (60) zu beenden,
ein Verzögerungsschalter (53) zum Verlängern einer Leistungsversorgungszeit zusätzlich elektrisch zwischen dem Netzteilschalter (52) und der Beleuchtungseinheit (60) verschaltet ist, wobei, wenn der Netzteilschalter (52) angeschaltet ist, der Verzögerungsschalter (53) zur Betätigung aktiviert ist, und wobei, wenn eine durch den Verzögerungsschalter (53) gesetzte verlängerte Zeit abgelaufen ist, der Netzteitschalter (52) in den Abschaltzustand zurückgesetzt wird, um die Leistungszufuhr für die Beleuchtungseinheit (60) zu beenden.

2. Rollerähnliches Fahrzeug mit dem Staufach (30) und der Beleuchtungsvorrichtung (20) nach Anspruch 1, wobei die Beleuchtungseinheit (60) an einer inneren Seitenwandfläche (301) des Staufachs (30) ausgebildet ist.

3. Rollerähnliches Fahrzeug mit dem Staufach (30) und der Beleuchtungsvorrichtung (20) nach Anspruch 1, wobei eine Lichtquelle der Beleuchtungseinheit (60) eine Leuchtdiodenlampe (LED), eine Kaltkathodenlampe oder eine Glühfadenlampe ist.

4. Rollerähnliches Fahrzeug mit dem Staufach (30) und der Beleuchtungsvorrichtung (20) nach Anspruch 1, wobei weiter ein Fahrersitzschlass (34) am Staufach (30) ausgebildet ist, wobei ein Schlosshaken (42) an der Bodenplatte (41) des Fahrersitzes (40) ausgebildet ist, wobei, wenn der Fahrersitz (40) sich in der Schließposition (A) befindet, das Fahrersitzschloss (34) und der Schlosshaken (42) einen eingerasteten Zustand bilden, und wobei, wenn der Fahrersitz (40) sich in der Öffnungsposition (B) befindet, das Fahrersitzschloss (34) und der Schlosshaken (42) einen nicht eingerasteten Zustand bilden.

5. Rollerähnliches Fahrzeug mit dem Staufach (30) und der Beleuchtungsvorrichtung (20) nach Anspruch 1, wobei die Abstandsmessschaltereinheit (50) einen Hauptkörper (54) und einen Lippenrand (55) aufweist, wobei das Staufach (30) eine Anschlussbuchse (35) aufweist, wobei die Abstandsmessschaltereinheit (50) von einer Innenseite des Staufachs (30) in die Anschlussbuchse (35) eingeführt wird, um so mit einer Eingriffsstruktur (70), die an einer Außenseite des Staufachs (30) entsprechend einer Position der Anschlussbuchse (35) ausgebildet ist, kombiniert zu werden, wobei die Eingriffsstruktur (70) ein inneres Loch und einen Vorsprung (72) aufweist, wobei das innere Loch dazu verwendet wird, die Abstandsmessschaltereinheit (50) aufzunehmen, und wobei der Lippenrand (55) und der Vorsprung (72) eine dicke Wand des Staufachs (30) nahe der Anschlussbuchse (35) nach oben und nach unten klemmen, um einen eingerasteten Zustand zu bilden, und wobei die Eingriffsstruktur (70) ein Klemmbolzen oder eine Schraube und eine Schraubenmutter ist.

6. Rollerähnliches Fahrzeug mit dem Staufach (30) und der Beleuchtungsvorrichtung (20) nach Anspruch 1, wobei die Beleuchtungseinheit (60) einen Lippenrand (62) aufweist, wobei mindestens eine Muffe (36) an einer inneren Seitenwarsdfläche (301) des Staufachs (30) ausgebildet ist, wobei die Beleuchtungseinheit (60) von einer Innenseite des Staufachs (30) in die Muffe (36) eingeführt ist, um so mit einer Eingriffsstruktur (70'), die an einer Außenseite des Staufachs (30) entsprechend der Position der Muffe (36) ausgebildet ist, kombiniert zu werden, wobei die Eingriffsstruktur (70') ein inneres Loch und einen Vorsprung (72') aufweist, und wobei das innere Loch und der Vorsprung (72') eine dicke Wand des Staufachs (30) nahe der Muffe (36) nach oben und nach unten klemmen, um einen eingerasteten Zustand zu bilden, und wobei die Eingriffsstruktur (70') ein Klemmbolzen oder eine Schraube und eine Schraubenmutter ist.

## Revendications

1. Véhicule du type scooter avec un compartiment de stockage (30) et un dispositif d'éclairage (20), le compartiment de stockage (30) ayant une ouverture de dessus (31), une portion d'articulation à pivot (32) et une plateforme (33), la plateforme (33) étant plus haute qu'une surface de fond du côté intérieur du compartiment de stockage (30), la portion d'articulation à pivot (32) étant reliée à une selle (40) qui a une plaque de fond (41), la selle (40) étant pivotée vers une position de fermeture (A) pour permettre à la plaque de fond (41) de couvrir l'ouverture de dessus (31) et vers une position d'ouverture (B) pour permettre à la plaque de fond (41) de s'éloigner de l'ouverture de dessus (31) avec la portion d'articulation à pivot (32) en tant qu'axe, dans lequel
une unité de commutation de détection de distance (50) et au moins une unité d'éclairage (60) sont respectivement disposées dans le compartiment de stockage (30), l'unité de commutation de détection de distance (50) étant une unité de commutation de détection à infrarouge (501), l'unité de commutation de détection de distance (50) étant disposée sur la plateforme (33), l'unité de commutation de détection de distance (50) étant alimentée par une unité d'alimentation (80) et comprenant un détecteur de distance (51) qui a une unité d'émission infrarouge (511) et une unité de réception infrarouge (512) et un interrupteur d'alimentation (52) pour commander la marche ou l'arrêt par le détecteur de distance (51), dans lequel, lorsque la selle (40) est en position de fermeture (A), l'interrupteur d'alimentation (52) est à l'état d'arrêt et lorsque la selle (40) et en position d'ouverture (B), l'interrupteur d'alimentation (52) est en état de marche, dans lequel l'unité d'éclairage (60) est couplée électriquement à l'interrupteur d'alimentation (52), le détecteur de distance (51) détecte un changement de distance entre le détecteur de distance (51) et la plaque de fond (41) de la selle (40) si bien que l'interrupteur d'alimentation (52) est activé pour permettre à l'unité d'éclairage (60) d'éclairer ou l'interrupteur d'alimentation (52) est désactivé pour arrêter l'éclairage de l'unité d'éclairage (60),
un temporisateur (53) pour prolonger une durée d'alimentation est de plus relié électriquement entre l'interrupteur d'alimentation (52) et l'unité d'éclairage (60), dans lequel, lorsque l'interrupteur d'alimentation (52) est activé, le temporisateur (53) est activé pour l'action et lorsqu'une durée d'alimentation fixée par le temporisateur (53) est dépassée, l'interrupteur d'alimentation (52) est remis à l'état d'arrêt pour arrêter l'alimentation pour l'unité d'éclairage (60).

2. Véhicule du type scooter avec le compartiment de stockage (30) et le dispositif d'éclairage (20) selon la revendication 1, l'unité d'éclairage (60) étant disposée sur une surface de paroi du côté intérieur (301) du compartiment de stockage (30).

3. Véhicule du type scooter avec le compartiment de stockage (30) et le dispositif d'éclairage (20) selon la revendication 1, une source de lumière de l'unité d'éclairage (60) étant une lampe à diode électroluminescente (LED), une lampe à cathode froide ou une lampe à incandescence.

4. Véhicule du type scooter avec le compartiment de stockage (30) et le dispositif d'éclairage (20) selon la revendication 1, un verrou de selle (34) étant de plus disposé sur le compartiment de stockage (30), un crochet de verrou (42) étant disposé sur la plaque de fond (41) de la selle (40), lorsque la selle (40) est dans la position de fermeture (A), le verrou de selle (34) et le crochet de verrou (42) forment un état d'enclenchement et lorsque la selle (41) est dans la position d'ouverture (B), le verrou de selle (34) et le crochet de verrou (42) forment un état de désenclenchement.

5. Véhicule du type scooter avec le compartiment de stockage (30) et le dispositif d'éclairage (20) selon la revendication 1, l'unité de commutation de détection de distance (50) ayant un corps principal (54) et un bord de lèvre (55), le compartiment de stockage (30) ayant un vérin (35), l'unité de commutation de détection de distance (50) étant insérée dans le vérin (35) à partir d'un côté intérieur du compartiment de stockage (30) de manière à être combinée avec une structure d'enclenchement (70) disposée sur un côté extérieur du compartiment de stockage (30) correspondant à une position du vérin (35), la structure d'enclenchement (70) ayant un trou interne et un coussinet (72), le trou interne étant utilisé pour recevoir l'unité de commutation de détection de distance (50), et le bord de lèvre (55) et le coussinet (72) serrent une paroi épaisse du compartiment de stockage (30) près du vérin (35) vers le haut et vers le bas pour former un état d'enclenchement et la structure d'enclenchement (70) est une tige d'accrochage ou un groupe de vis et écrou.

6. Véhicule du type scooter avec le compartiment de stockage (30) et le dispositif d'éclairage (20) selon la revendication 1, l'unité d'éclairage (60) ayant un bord de lèvre (62), au moins une douille (36) est disposée sur une surface de paroi du côté intérieur (301) du compartiment de stockage (30), l'unité d'éclairage (60) étant insérée dans la douille (36) à partir d'un côté intérieur du compartiment de stockage (30) de manière à être combinée avec une structure d'enclenchement (70) disposée sur un côté extérieur du compartiment de stockage (30) correspondant à une position de la douille (36), la structure d'enclenchement (70) ayant un trou interne et un coussinet (72), le trou interne étant utilisé pour recevoir l'unité de commutation de détection de distance (50), et le bord de lèvre (55) et le coussinet (72) serrent une paroi épaisse du compartiment de stockage (30) près de la douille (36) vers le haut et vers le bas pour former un état d'enclenchement et la structure d'enclenchement (70) est une tige d'accrochage ou un groupe de vis et écrou.
